(19) **Europäisches Patentamt / European Patent Office / Office européen des brevets**

(11) **EP 4 108 633 A1**

(12) **EUROPEAN PATENT APPLICATION**
published in accordance with Art. 153(4) EPC

(43) Date of publication:
**28.12.2022 Bulletin 2022/52**

(21) Application number: **21756744.5**

(22) Date of filing: **08.01.2021**

(51) International Patent Classification (IPC):
**C01D 15/02** (2006.01)    **B01D 61/42** (2006.01)
**C01D 15/04** (2006.01)    **C25B 1/16** (2006.01)
**H01M 4/505** (2010.01)

(52) Cooperative Patent Classification (CPC):
**B01D 61/42; C01D 15/02; C01D 15/04; C25B 1/16; H01M 4/505;** Y02E 60/10

(86) International application number:
**PCT/JP2021/000466**

(87) International publication number:
**WO 2021/166479 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.02.2020 JP 2020024294**

(71) Applicant: SUMITOMO METAL MINING CO., LTD.
**Tokyo**
**105-8716 (JP)**

(72) Inventors:
• **MATSUMOTO, Shin-ya**
**Niihama-shi, Ehime 792-0002 (JP)**

• **TAKANO, Masatoshi**
**Niihama-shi, Ehime 792-0002 (JP)**
• **HEGURI, Shin-ichi**
**Niihama-shi, Ehime 792-0002 (JP)**
• **ASANO, Satoshi**
**Niihama-shi, Ehime 792-0002 (JP)**
• **IKEDA, Osamu**
**Niihama-shi, Ehime 792-0002 (JP)**
• **KUDO, Yohei**
**Niihama-shi, Ehime 792-0002 (JP)**

(74) Representative: **Jones, Nicholas Andrew**
**Withers & Rogers LLP**
**2 London Bridge**
**London SE1 9RA (GB)**

(54) **LITHIUM HYDROXIDE PRODUCTION METHOD**

(57) A method for producing lithium hydroxide that allows reducing a load of removing divalent or more ions with an ion-exchange resin is provided. The method for producing lithium hydroxide includes steps (1) to (3) below. (1) a neutralization step: a step of adding an alkali to a first lithium chloride containing liquid to obtain a post-neutralization liquid, (2) an ion-exchange step: a step of bringing the post-neutralization liquid into contact with an ion-exchange resin to obtain a second lithium chloride containing liquid, and (3) a conversion step: a step of electrodialyzing the second lithium chloride containing liquid to obtain a lithium hydroxide containing liquid. Since this producing method allows roughly removing divalent or more ions in the neutralization step, a load of metal removal with the ion-exchange resin is reducible.

FIG. 1

FIRST LITHIUM CHLORIDE CONTAINING LIQUID
→ NEUTRALIZATION STEP
→ NEUTRALIZED PRECIPITATE / POST-NEUTRALIZATION LIQUID
→ ION-EXCHANGE STEP
→ SECOND LITHIUM CHLORIDE CONTAINING LIQUID
→ CONVERSION STEP
→ LITHIUM HYDROXIDE CONTAINING LIQUID

EP 4 108 633 A1

**Description**

TECHNICAL FIELD

The present invention relates to a method for producing lithium hydroxide, and more specifically, relates to a method for producing lithium hydroxide in which a lithium hydroxide containing liquid is obtained from a lithium chloride containing liquid.

BACKGROUND ART

In terms of high energy density and high charge/discharge capacity, a lithium ion secondary battery is often used as an on-vehicle battery. Then, as a positive electrode material of the lithium ion secondary battery, demand for a nickel-based positive electrode material, that is, NCA is expanding. When the NCA is used for the lithium ion secondary battery, it is economically preferred that lithium is supplied as lithium hydroxide.

Patent Document 1 discloses a producing method in which a high purity lithium hydroxide is obtained from lithium chloride by a bipolar membrane electrodialysis. This document also discloses that the lithium chloride is obtained by the reaction of lithium carbonate with hydrochloric acid, obtained by extraction from a lithium containing ore with hydrochloric acid, or selectively adsorbed and separated from brine.

In the step of obtaining lithium hydroxide from lithium chloride by the electrodialysis, a diaphragm used for the electrodialysis is, for example, a combination of a bipolar membrane, an anion membrane, and a cation membrane. When these diaphragms contain a lot of divalent or more ions, a load is applied to the diaphragm to possibly damage the membrane. In view of this, a liquid before performing the electrodialysis needs to remove the divalent or more ions by using an ion-exchange resin.

Patent Document 1: Japanese Unexamined Patent Application Publication No. 2009-269810

DISCLOSURE OF THE INVENTION

PROBLEMS TO BE SOLVED BY THE INVENTION

However, a significantly large number of divalent or more ions are contained, a load is applied to the removal by the ion-exchange resin. Therefore, when the divalent or more ions are attempted to be removed with more certainty, the ion-exchange resin needs to be frequently changed. However, the cost increases because the ion-exchange resin is expensive, alternatively a load of a replacement work or a work for regenerating the ion-exchange resin increases.

In view of the above-described circumstances, the present invention has an object to provide a method for producing lithium hydroxide that allows reducing a load of removing divalent or more ions with an ion-exchange resin.

SOLUTIONS TO THE PROBLEMS

A method for producing lithium hydroxide in a first invention includes steps (1) to (3) below. (1) a neutralization step: a step of adding an alkali to a first lithium chloride containing liquid to obtain a post-neutralization liquid, (2) an ion-exchange step: a step of bringing the post-neutralization liquid into contact with an ion-exchange resin to obtain a second lithium chloride containing liquid, and (3) a conversion step: a step of electrodialyzing the second lithium chloride containing liquid to obtain a lithium hydroxide containing liquid.

A method for producing lithium hydroxide in a second invention includes steps (1) to (4) below. (1) an oxidation step: a step of adding an oxidant to a first lithium chloride containing liquid to obtain a post-oxidation liquid, (2) a neutralization step: a step of adding an alkali to the post-oxidation liquid to obtain a post-neutralization liquid, (3) an ion-exchange step: a step of bringing the post-neutralization liquid into contact with an ion-exchange resin to obtain a second lithium chloride containing liquid, and (4) a conversion step: a step of electrodialyzing the second lithium chloride containing liquid to obtain a lithium hydroxide containing liquid.

In the method for producing lithium hydroxide of a third invention, in the first invention or the second invention, the first lithium chloride containing liquid is obtained through an adsorption step of bringing a lithium adsorbent obtained from lithium manganate into contact with a low lithium content liquid to obtain a post-adsorption lithium manganate, and an elution step of bringing the post-adsorption lithium manganate into contact with a hydrochloric acid solution to obtain the first lithium chloride containing liquid.

In the method for producing lithium hydroxide of a fourth invention, in any of the first invention to the third invention, the ion-exchange resin used in the ion-exchange step is an iminodiacetic acid type chelating resin or an iminodiacetate type chelating resin.

In the method for producing lithium hydroxide of a fifth invention, in the fourth invention, the iminodiacetic acid type chelating resin and the iminodiacetate type chelating resin have functional groups of a sodium form.

In the method for producing lithium hydroxide of a sixth invention, in any of the first invention to the fifth invention, the ion-exchange step is performed with a method using a column, and the post-neutralization liquid passing through the column has a liquid passing rate of 1 or more and 7 or less in terms of SV.

In the method for producing lithium hydroxide of a seventh invention, in the sixth invention, the post-neutralization liquid passing through the column has a liquid passing quantity of 10 or more and 35 or less in terms of BV.

EFFECTS OF THE INVENTION

According to the first invention, the neutralization step of adding the alkali is provided before the ion-exchange step in which the ion-exchange resin is used. Accordingly, since divalent or more ions can be roughly removed in the neutralization step, a load of metal removal with the ion-exchange resin can be reduced.

According to the second invention, the oxidation step of adding the oxidant and the neutralization step of adding the alkali are provided before the ion-exchange step in which the ion-exchange resin is used. Accordingly, manganese can be removed when the first lithium chloride containing liquid contains manganese, and other divalent or more ions can be roughly removed in the neutralization step. Therefore, the load of metal removal with the ion-exchange resin can be further reduced.

According to the third invention, the first lithium chloride containing liquid is obtained through the adsorption step of adsorbing lithium with the lithium adsorbent obtained from lithium manganate and an elution step of eluting the lithium from the post-adsorption lithium manganate. Accordingly, even when a part of the manganese dissolves in the elution step, this manganese is removed by the subsequent neutralization step or the combination of the oxidation step and the neutralization step. Therefore, a high-purity lithium hydroxide can be obtained while using the lithium manganate excellent in adsorption capability.

According to the fourth invention, the ion-exchange resin used in the ion-exchange step is an iminodiacetic acid type chelating resin or an iminodiacetate type chelating resin. Accordingly, the availability of the ion-exchange resin is improved.

According to the fifth invention, the iminodiacetic acid type chelating resin or the like has the functional group of sodium form. Accordingly, while a pH of a passing liquid changes in the case of a hydrogen type, the pH does not change in the case of the sodium form, thus stabilizing the property of the liquid in the reaction.

According to the sixth invention, the ion-exchange step is performed with a method using a column, and a liquid passing rate in the column is 1 or more and 7 or less in terms of SV. Accordingly, magnesium and calcium, which are divalent metals, can be removed with more certainty.

According to the seventh invention, a liquid passing quantity of the post-neutralization liquid passing through the column is 10 or more and 35 or less in terms of BV. Accordingly, the magnesium and the calcium can be further surely removed.

BRIEF DESCRIPTION OF THE DRAWINGS

Fig. 1 is a flowchart of a method for producing lithium hydroxide according to a first embodiment of the present invention.
Fig. 2 is a flowchart of a method for producing lithium hydroxide according to a second embodiment of the present invention.
Fig. 3 is a flowchart of a method for producing lithium hydroxide according to a third embodiment of the present invention.
Fig. 4 is a flowchart of a method for producing lithium hydroxide according to a fourth embodiment of the present invention.

DESCRIPTION OF PREFERRED EMBODIMENTS

The following describes embodiments of the present invention based on the drawings. However, the embodiments described below are to exemplarily describe methods for producing lithium hydroxide for embodying a technical idea of the present invention, and the present invention does not limit the method for producing lithium hydroxide to the following. Note that the contents described in some examples and embodiments are applicable to other examples and embodiments.

A method for producing lithium hydroxide according to the present invention includes the following steps (1) to (3): (1) a neutralization step: a step of adding an alkali to a first lithium chloride containing liquid to obtain a post-neutralization liquid, (2) an ion-exchange step: a step of bringing the post-neutralization liquid into contact with an ion-exchange resin to obtain a second lithium chloride containing liquid, and (3) a conversion step: a step of electrodialyzing the second lithium chloride containing liquid to obtain a lithium hydroxide containing liquid. With this configuration, since divalent or more ions can be roughly removed in the neutralization step, a load of metal removal with the ion-exchange resin can be reduced.

A method for producing lithium hydroxide according to the present invention includes the following steps (1) to (4): (1) an oxidation step: a step of adding an oxidant to a first lithium chloride containing liquid to obtain a post-oxidation liquid, (2) a neutralization step: a step of adding an alkali to the post-oxidation liquid to obtain a post-neutralization liquid, (3) an ion-exchange step: a step of bringing the post-neutralization liquid into contact with an ion-exchange resin to obtain a second lithium chloride containing liquid, and (4) a conversion step: a step of electrodialyzing the second lithium chloride containing liquid to obtain a lithium hydroxide containing liquid. With this configuration, manganese can be removed when the first lithium chloride containing liquid contains the manganese, and other divalent or more ions can be roughly removed in the neutralization step. Therefore, the load of metal removal with the ion-exchange resin can be further reduced.

The first lithium chloride containing liquid is preferably obtained through an adsorption step of bringing a lithium adsorbent obtained from lithium manganate into contact with a low lithium content liquid to obtain a post-adsorption lithium manganate and an elution step of bringing the post-adsorption lithium manganate into contact with a hydrochloric acid solution to obtain the first lithium chloride containing liquid. With this configuration, even when a part of the manganese dissolves in the elution step, this manganese is removed by the subsequent neutralization step or the combination of the oxidation step and the neutralization step. Therefore, a high-purity lithium hydroxide can be obtained while using the lithium manganate excellent in adsorption capability.

The ion-exchange resin used in the ion-exchange step is preferably an iminodiacetic acid type chelating resin or an iminodiacetate type chelating resin. With this configuration, the availability of the ion-exchange resin is improved.

The iminodiacetic acid type chelating resin and the iminodiacetate type chelating resin preferably have functional groups in a sodium form. With this configuration, while a pH of a passing liquid would change if the functional group of the chelating resin were a hydrogen type, the pH does not change in the case of the sodium form, thus stabilizing the property of the liquid in the reaction.

The ion-exchange step is preferably performed with a method using a column, and the post-neutralization liquid passing through the column preferably has a liquid passing rate of 1 or more and 7 or less in terms of SV. With this configuration, magnesium and calcium, which are divalent metals, can be removed with more certainty.

The post-neutralization liquid passing through the column preferably has a liquid passing quantity of 10 or more and 35 or less in terms of BV. With this configuration, the magnesium and the calcium can be further surely removed.

(First Embodiment)

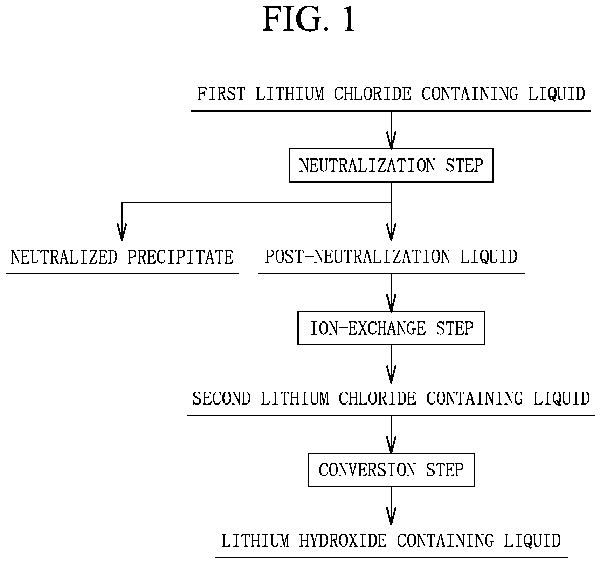

Fig. 1 illustrates a flowchart of a method for producing lithium hydroxide according to the first embodiment of the present invention. The method for producing lithium hydroxide according to the embodiment includes three steps of a neutralization step, an ion-exchange step, and a conversion step.

<Neutralization Step>

The neutralization step illustrated in Fig. 1 is a step of adding an alkali to a first lithium chloride containing liquid to obtain a post-neutralization liquid. By this step, neutralized precipitates containing impurities other than lithium chloride are obtained. Here, the first lithium chloride containing liquid means a liquid that contains lithium chloride when this liquid is crystallized. For example, a liquid obtained by the reaction of lithium carbonate with hydrochloric acid, a liquid obtained from a lithium containing ore by extraction with hydrochloric acid, or a liquid obtained by selectively adsorbing and separating lithium from brine is included. As described later in the other embodiment, the first lithium chloride containing liquid is preferably a liquid obtained by selectively adsorbing and separating lithium from brine.

In the neutralization step, an alkali is added to remove metals other than lithium. The ion-exchange resin is used for removing mainly divalent or more metal ions. However, when a significantly large amount of divalent or more metal ions are contained in the liquid before contacting the ion-exchange resin, the ion-exchange resin needs to be frequently changed. However, since the ion-exchange resin is expensive, the cost for producing lithium hydroxide increases, or a load of a work to change the ion-exchange resin increases. A load of work to regenerate the ion-exchange resin also increases. Therefore, in the neutralization step, the alkali is added to remove a part of metals other than lithium. Divalent magnesium, manganese, or the like corresponds to the metal other than lithium. Specifically, in the neutralization step, sodium hydroxide is added to the first lithium chloride containing liquid to precipitate magnesium and manganese as magnesium hydroxide and manganese hydroxide, and the precipitates are recovered, thus removing the metals other than lithium. While alkalinity is enough to precipitate to remove magnesium and the like, an excessively high pH increases the neutralizer cost, and this is not preferable. Accordingly, the pH of the post-neutralization liquid after the neutralization step is preferably 8.5 or more and 12 or less.

<Ion-Exchange Step>

The ion-exchange step illustrated in Fig. 1 is a step of bringing the post-neutralization liquid into contact with the ion-exchange resin to obtain the second lithium chloride containing liquid. In the ion-exchange step, calcium that cannot be removed in the neutralization step, aluminum remaining depending on the pH in the neutralization step, and an infinitesimal quantity of remaining manganese or magnesium that has not been completely removed in the neutralization step are removed.

The ion-exchange resin is a kind of synthetic resin, and has a structure ionized as an ion-exchange group in a part of its molecular structure. In the ion-exchange step, an ion-exchange resin that can remove the divalent or more metal ions which have failed to be captured in the neutralization step, that is, an iminodiacetic acid type chelating resin or an iminodiacetate type chelating resin is preferred. For the pH of the post-neutralization liquid in the ion-exchange step, the preferred value is decided depending on the ion-exchange resin. However, it is preferred to directly perform the ion-exchange step on the post-neutralization liquid obtained by the neutralization step.

Furthermore, in the iminodiacetic acid type chelating resin and the iminodiacetate type chelating resin, the functional group is preferably a sodium form.

Since the ion-exchange resin used in the ion-exchange step is the iminodiacetic acid type chelating resin or the iminodiacetate type chelating resin, the availability of the ion-exchange resin is improved.

The functional group of the iminodiacetic acid type chelating resin or the like is the sodium form. Therefore, while the pH of the passing liquid changes in the case of a hydrogen type, the pH does not change in the case of the sodium form, thus stabilizing the property of the liquid in the reaction.

The method for bringing the ion-exchange resin into contact with the post-neutralization liquid is preferably a method using a column. However, a batch mixing method is employed in some cases.

In the case of the method using the column, the post-neutralization liquid passing through the column preferably has a liquid passing rate of 1 or more and 7 or less in terms of SV. SV is the abbreviation of Space Velocity, and indicates the liquid passing quantity (unit is BV described below) per unit time (one hour). When the liquid passing rate is less than 1 in terms of SV, the efficiency of producing lithium hydroxide decreases. The liquid passing rate greater than 7 in terms of SV causes the liquid flow to be excessively fast, thus failing to capture the metals in some cases. This liquid passing rate allows the removal of magnesium and calcium, which are divalent metals, with more certainty.

The post-neutralization liquid passing through the column preferably has a liquid passing quantity of 10 or more and 35 or less in terms of BV. BV is the abbreviation of Bed Volume, and is a unit indicating how many times of a volume of the ion-exchange resin in the column. When the liquid passing quantity is less than 10 in terms of BV, the efficiency of producing lithium hydroxide decreases. The liquid passing quantity greater than 35 in terms of BV causes a breakthrough exceeding a metal capture capacity of the ion-exchange resin, thus failing to capture the metals in some cases. This liquid passing quantity can further ensure the removal of the magnesium and the calcium.

The ion-exchange resin used in the ion-exchange step can be regenerated. By immersing the used ion-exchange resin in a liquid in which a hydrogen concentration of acid is 0.3 mol/L or more and 2.0 mol/L or less, the captured metals are eluted.

<Conversion Step>

As illustrated in Fig. 1, in the conversion step, lithium chloride contained in the second lithium chloride containing liquid is converted into lithium hydroxide to obtain a lithium hydroxide containing liquid in which lithium hydroxide is dissolved. In the second lithium chloride containing liquid, lithium chloride is dissolved. In this step, for example, an electrodialysis using a bipolar membrane is performed to convert these liquids into the lithium hydroxide containing liquid containing lithium hydroxide and hydrochloric acid. That is, by performing the electrodialysis, lithium chloride in the second lithium chloride containing liquid is decomposed, lithium ions of lithium chloride pass through a cation membrane and bind to hydroxide ions to become lithium hydroxide, and for example, chloride ions pass through an anion membrane to become hydrochloric acid. The recovered hydrochloric acid can be recycled to the elution step. Accordingly, the usage of hydrochloric acid can be reduced.

Note that, for example, an electrodialysis using an ion-exchange membrane corresponds to the conversion step in addition to the electrodialysis using the bipolar membrane. When a cation-exchange membrane is used as the ion-exchange membrane, lithium hydroxide is generated in a cathode chamber.

In this embodiment, the neutralization step of adding the alkali is provided before the ion-exchange step of using the ion-exchange resin. Accordingly, since the divalent or more ions can be roughly removed in the neutralization step, the load of metal removal with the ion-exchange resin can be reduced.

<Step after Conversion Step>

When the lithium hydroxide containing liquid obtained in the conversion step is evaporated to dryness, lithium hydroxide is obtained. However, this lithium hydroxide containing liquid contains alkali metals, such as sodium or potassium, and the direct evaporation to dryness causes a solid material obtained from it to contain much hydroxides other than lithium hydroxide. In view of this, a crystallization step of solidifying lithium hydroxide dissolved in the lithium hydroxide containing liquid is preferably provided after the conversion step.

In the crystallization step, by solidifying the lithium hydroxide dissolved in the lithium hydroxide containing liquid, a solid lithium hydroxide is obtained. A crystallization mother liquor is obtained together with the solid lithium hydroxide. In the conversion step, lithium becomes a lithium hydroxide, and at the same time, the alkali metals, such as sodium and potassium, become hydroxides. Accordingly, they are also contained in the lithium hydroxide containing liquid obtained in the conversion step. Furthermore, chlorine ions as anions also pass through the membrane to be contained in the lithium hydroxide containing liquid. In the crystallization step, the difference in solubility between the hydroxides is used to solidify the lithium hydroxide and separate contained impurities.

In the crystallization step, the lithium hydroxide containing liquid is heated to be concentrated. In this respect, the concentration of metal ions contained in the liquid increases, and lithium hydroxide having a relatively low solubility is deposited and solidified at first. The deposited lithium hydroxide is recovered as the solid lithium hydroxide. In this respect, sodium hydroxide or potassium hydroxide having relatively high solubility is not deposited and remains in the liquid. Therefore, the purity of the recovered lithium hydroxide increases.

For example, at 60°C, the solubility of lithium hydroxide is 13.2 g/100 g-water, and it is seen that the solubility of lithium hydroxide is significantly low compared with 174 g/100 g-water of sodium hydroxide and 154 g/100 g-water of potassium hydroxide. Since the chlorine ion is 2 g/L also during the operation of heating to concentrate, the chlorine ion is not deposited as chloride of the alkali metal in the lithium hydroxide.

The crystallization step can be industrially performed with a continuous crystallization using a crystallization can. It can be performed also with a batch crystallization. The crystallization mother liquor generated in the crystallization step is a concentrated alkaline aqueous solution. Since the crystallization mother liquor contains lithium hydroxide by an amount of the solubility, repeating the step before the neutralization step increases a lithium recovery rate. In addition, the neutralizer cost decreases.

(Second Embodiment)

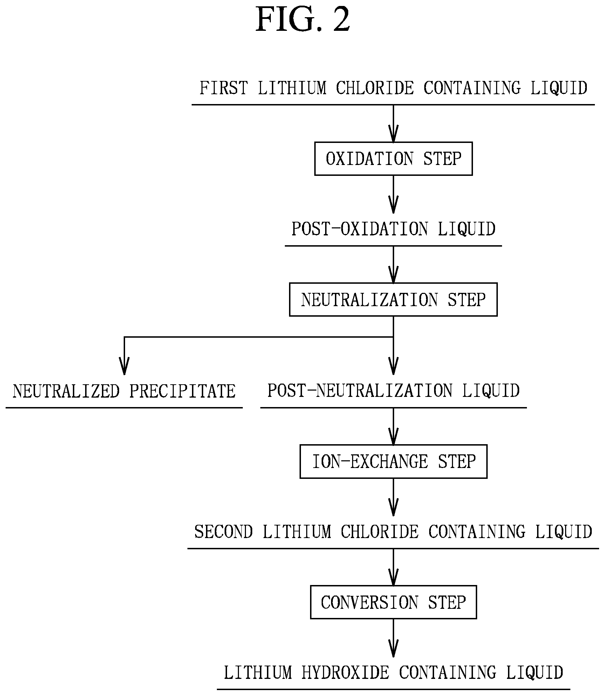

Fig. 2 illustrates a flowchart of a method for producing lithium hydroxide according to the second embodiment of the present invention. This embodiment is different from the first embodiment in that an oxidation step is provided as a previous step of the neutralization step. Others are the same as the first embodiment. The following describes the oxidation step as the difference.

<Oxidation Step>

The oxidation step is a step of adding an oxidant, such as air, oxygen, or sodium hypochlorite, to the first lithium chloride containing liquid to oxidize manganese in the first lithium chloride containing liquid and obtain insoluble manganese dioxide, thereby precipitating to remove manganese dissolved in the liquid. While the manganese is removable also in the neutralization step, the manganese is removed before the neutralization step by providing the oxidation step. Therefore, the load of removing the manganese in the neutralization step can be reduced. The manganese precipitated to be removed in the oxidation step is reusable. As the type of the oxidant used in the oxidation step, air, oxygen, sodium hypochlorite, or the like can be employed. The first lithium chloride containing liquid has a redox potential set to a pH and an electric potential positioned in a region of manganese dioxide in a Pourbaix diagram.

(Third Embodiment)

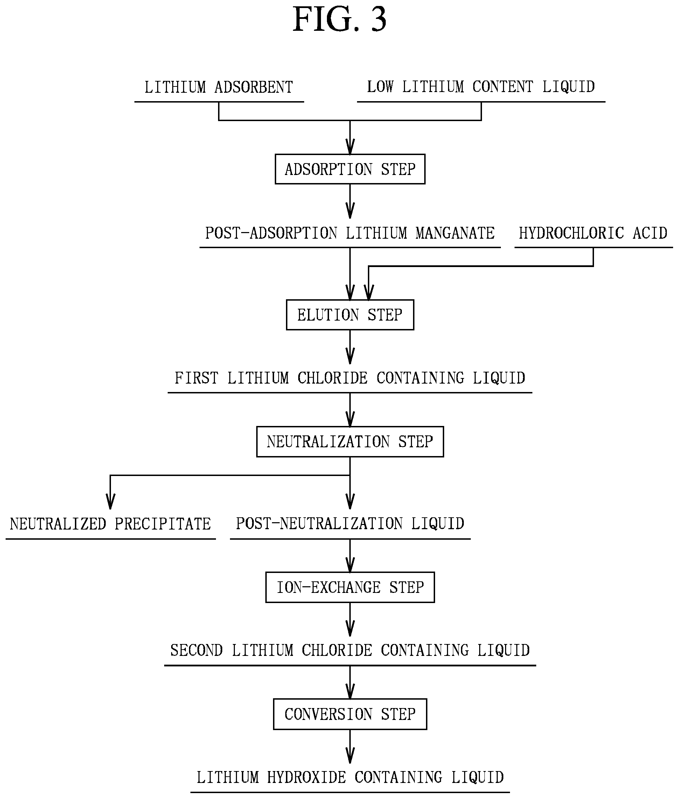

Fig. 3 illustrates a flowchart of a method for producing lithium hydroxide according to the third embodiment of the present invention. This embodiment is different from the first embodiment in that an adsorption step and an elution step are provided as previous steps of the neutralization step, and the first lithium chloride containing liquid is obtained through the adsorption step and the elution step. Others are the same as the first embodiment. The following describes the adsorption step and the elution step as the difference.

<Adsorption Step>

The adsorption step illustrated in Fig. 3 is a step of bringing a lithium adsorbent into contact with a low lithium content liquid having a relatively low lithium concentration, such as salt lake brine, to cause the lithium adsorbent to selectively adsorb lithium from the low lithium content liquid. A reaction equation in the adsorption step is indicated as Math. 1. While the reaction equation using $H_{1.6}Mn_{1.6}O_4$ as the lithium adsorbent is indicated here, the reaction equation is not specifically limited to this. For example, a lithium adsorbent obtained from lithium manganate having another spinel structure can be used. These lithium adsorbents are preferably manganese oxides obtained by bringing lithium manganate into contact with acid and desorbing lithium in the lithium manganate.

[Math. 1]

$$H_{1.6}Mn_{1.6}O_4 + 1.6LiCl \rightarrow Li_{1.6}Mn_{1.6}O_4 + 1.6HCl$$

The method for bringing them into contact is not specifically limited. For example, the column method and the batch mixing method correspond to the method for contacting. In the column method, when the lithium adsorbent is used as a fine powder, a liquid flow resistance is high and continuously flowing the liquid is often difficult. Therefore, it is preferred to use a pellet formed by kneading a lithium adsorbent (including a case of a precursor before becoming the lithium adsorbent) and a binder, such as an alumina binder, and sintering it.

In the adsorption step, the pH of the low lithium content liquid is preferably 3 or more and 10 or less. Since the reaction in the adsorption step is a reaction in which lithium is adsorbed to generate acid, when the pH of the liquid is low, the rate of reaction decreases or the reaction itself does not occur in some cases. Therefore, it is preferred to increase the pH of the low lithium content liquid before bringing the low lithium content liquid into contact with the lithium adsorbent. However, when the low lithium content liquid contains magnesium, the excessively high pH precipitates magnesium hydroxide, and the adsorption reaction of lithium is physically inhibited when the magnesium hydroxide covers a surface of the lithium adsorbent. Especially, when the column method is employed as the method for contacting, obstructions are more generated in the column by magnesium hydroxide. In view of them, the pH of the first lithium chloride containing liquid is preferably 10 or less.

When the pH is 3 or less after the liquid passes through the column, the lower portion of the column possibly fails to efficiently adsorb lithium. In a circulation method, it is preferred to add a neutralizer to the liquid flown out after passing through the column to adjust the pH in the above-described range, and then return it to the column. When the column method is used, it is only necessary to change the liquid passing rate depending on the required throughput. When precipitates are generated after the neutralization, the liquid can be smoothly passed through the column by the use of a filtration device, such as a filter press or a check filter, as necessary.

After the adsorption operation, for performing the elution step as the next step, the lithium adsorbent after lithium adsorption is cleaned with water, as necessary. In the case of the liquid passing through the column, a distilled water having a relatively high purity or the like is passed through the column after passing through of the low lithium content liquid, thereby performing an extrusion cleaning of the internally remaining low lithium content liquid. In the case of the batch mixing, the lithium adsorbent after lithium adsorption is poured with water after the solid-liquid separation, thereby removing the attached low lithium content liquid.

<Elution Step>

As illustrated in Fig. 3, in the elution step, the post-adsorption lithium manganate in which lithium is adsorbed is brought in contact with hydrochloric acid to obtain the first lithium chloride containing liquid. The post-adsorption lithium manganate has a form of, for example, lithium manganate, and lithium is eluted by bringing the post-adsorption lithium manganate into contact with hydrochloric acid. While the method for contacting is generally the column method, the batch mixing method may be employed, and any contacting method is possible. Math. 2 is a reaction equation in the lithium elution.

[Math. 2]

$$Li_{1.6}Mn_{1.6}O_4 + 1.6HCl \rightarrow H_{1.6}Mn_{1.6}O_4 + 1.6LiCl$$

Here, while the lithium manganate is indicated as $Li_{1.6}Mn_{1.6}O_4$, the lithium manganate is not specifically limited to it. For example, a lithium adsorbent obtained from lithium manganate having another spinel structure can be used. While it is only necessary that the concentration of the hydrochloric acid has an amount enough for eluting the lithium, the lithium manganate is dissolved to be worn away when the concentration is excessively high. In addition, the lithium is not eluted when the concentration is excessively low. The hydrochloric acid concentration is preferably 0.3 mol/L or more and 2.0 mol/L or less. When the column method is used, it is only necessary to change the liquid passing rate depending on the required throughput.

An eluent, that is, the first lithium chloride containing liquid, obtained in this step contains sodium, potassium, magnesium, and calcium slightly associated in the adsorption step. When the lithium adsorbent is lithium manganate, manganese eluted from the lithium adsorbent is also contained. In addition, when a granulated body using an alumina binder is used as the lithium adsorbent, the second lithium chloride containing liquid contains aluminum. Among these impurities, polyvalent metals other than sodium or potassium are removed by the neutralization step or the combination of the oxidation step and the neutralization step described above because they cause a trouble, such as decreased product lifetime of the membrane in the following conversion step. Note that the lithium adsorbent after lithium adsorption returns to the lithium adsorbent by the elution operation, and has become a state where lithium can be adsorbed again. Therefore, reusing in the adsorption step is allowed. In the case of reusing, the lithium adsorbent is preferably cleaned with water.

(Fourth Embodiment)

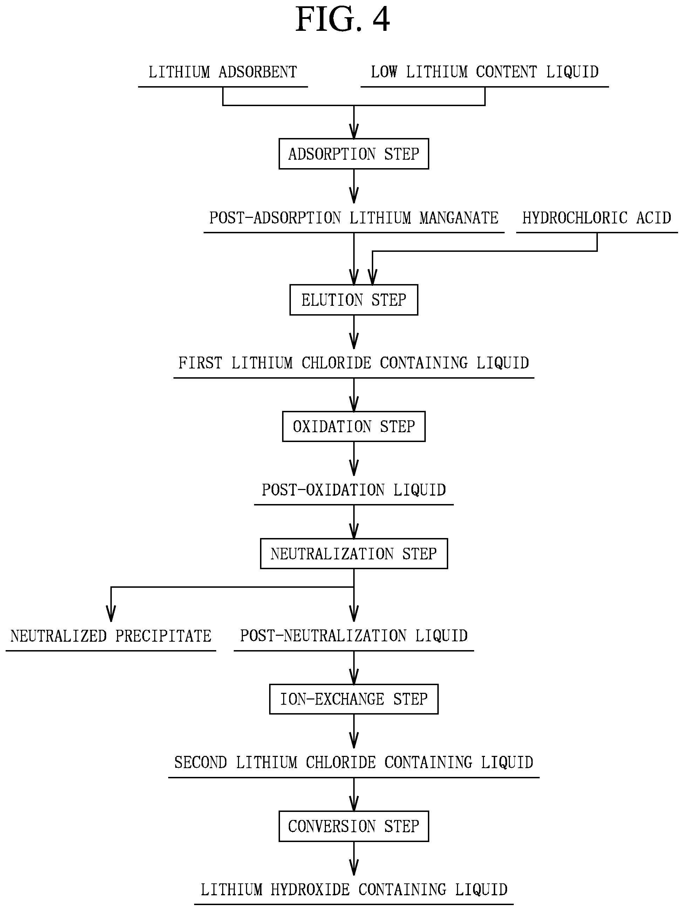

Fig. 4 illustrates a flowchart of a method for producing lithium hydroxide according to the fourth embodiment of the present invention. This embodiment is different from the second embodiment in that an adsorption step and an elution step are provided as previous steps of the neutralization step. Others are the same as the second embodiment. Details of the adsorption step and the elution step are the same as those in the third embodiment described above.

[Examples]

While the following describes specific examples of the method for producing lithium hydroxide according to the present invention, the present invention is not limited to these examples.

(Example 1)

<Neutralization Step>

An alkali was added to the first lithium chloride containing liquid, and the post-neutralization liquid was obtained. The first lithium chloride containing liquid was obtained by eluting lithium adsorbed by the lithium adsorbent with hydrochloric acid. The alkali used in the neutralization step is a sodium hydroxide. Table 1 indicates weights per unit volume of metal ions contained in the obtained post-neutralization liquid. The analysis of metal concentration was performed with ICP-AES. In the neutralization step, the weights per unit volume of aluminum, magnesium, and manganese are relatively low. However, the weight per unit volume of calcium exhibits a very high value.

[Table 1]

| Al | Ca | Mg | Mn |
|---|---|---|---|
| g/L | g/L | g/L | g/L |
| 0.001 | 0.42 | 0.001 | 0.001 |

<Ion-Exchange Step>

As the ion-exchange resin, CR11 (manufactured by Mitsubishi Chemical Corporation), which is an iminodiacetic acid type chelating resin, was used. This chelating resin of 20 ml was put in a glass column having a diameter of 20 mm, and the ion-exchange step was performed. The liquid passing rate at this time was set to 5 in terms of SV (100 ml/h because the capacity was 20 ml). The weights per unit volume were measured for the above-described metal ions every 5 in terms of BV (100 ml because the volume was 20 ml). The measurement was performed with the same ICP-AES used in the measurement of the post-neutralization liquid. Table 2 indicates the result.

[Table 2]

| BV | Al g/L | Ca g/L | Mg g/L | Mn g/L |
|---|---|---|---|---|
| 5 | 0.00005 | 0.00005 | 0.00005 | 0.00005 |
| 10 | 0.00005 | 0.00005 | 0.00005 | 0.00005 |
| 15 | 0.00005 | 0.00005 | 0.00005 | 0.00005 |
| 20 | 0.00005 | 0.00005 | 0.00005 | 0.00005 |
| 25 | 0.00005 | 0.00005 | 0.00005 | 0.00005 |
| 30 | 0.00005 | 0.00005 | 0.00005 | 0.00005 |
| 35 | 0.00005 | 0.00012 | 0.00005 | 0.00005 |
| 40 | 0.001 | 0.002 | 0.01 | 0.01 |
| 45 | 0.001 | 0.009 | 0.01 | 0.01 |
| 50 | 0.001 | 0.32 | 0.01 | 0.01 |

The weights per unit volume of the four metal ions are 0.00005 g/L, which is a lower limit value of the measuring device used for the measurement, until 35 in terms of BV, and it is seen that these metals were captured by the chelating resin in the ion-exchange step. However, the BV exceeding 40 is considered to exceed the capture capacity of the chelating resin, and the metal ions each have the weight per unit volume equal to that in the post-neutralization liquid, or close to its value.

(Comparative Example 1)

The neutralization step and the ion-exchange step were performed under the same condition as those in Example 1 except that the liquid passing rate in the ion-exchange step was set to 10 in terms of SV (200 ml/h), and the weight per unit volume was measured every 10 in terms of BV. Table 3 indicates the result.

[Table 3]

| BV | Al g/L | Ca g/L | Mg g/L | Mn g/L |
|---|---|---|---|---|
| 10 | 0.0005 | 0.01 | 0.0005 | 0.0005 |
| 20 | 0.0005 | 0.005 | 0.001 | 0.0005 |
| 30 | 0.001 | 0.003 | 0.001 | 0.001 |
| 40 | 0.001 | 0.01 | 0.001 | 0.001 |
| 50 | 0.001 | 0.88 | 0.001 | 0.001 |

From the point at which the BV is 10, the weight per unit volume of every metal ion is high, and is close to the weight per unit volume in the post-neutralization liquid. This is considered because the ion-exchange resin cannot capture the metals due to the liquid passing rate having a large value exceeding 7 in terms of SV.

(Comparative Example 2)

The neutralization step and the ion-exchange step were performed under the same condition as those in Example 1 except that the liquid passing rate in the ion-exchange step was set to 25 in terms of SV (500 ml/h), and the weight per unit volume was measured every 50 in terms of BV. Table 4 indicates the result.

EP 4 108 633 A1

[Table 4]

| BV | Al | Ca | Mg | Mn |
|---|---|---|---|---|
| | g/L | g/L | g/L | g/L |
| 25 | 0.0008 | 0.002 | 0.001 | 0.001 |
| 50 | 0.001 | 0.1 | 0.001 | 0.001 |

From the point at which the BV is 25, the weight per unit volume of every metal ion is high, and is close to the weight per unit volume in the post-neutralization liquid. This is considered because the ion-exchange resin cannot capture the metals due to the liquid passing rate having a large value exceeding 7 in terms of SV.

Claims

1. A method for producing lithium hydroxide comprising steps (1) to (3) below:

   (1) a neutralization step: a step of adding an alkali to a first lithium chloride containing liquid to obtain a post-neutralization liquid;
   (2) an ion-exchange step: a step of bringing the post-neutralization liquid into contact with an ion-exchange resin to obtain a second lithium chloride containing liquid; and
   (3) a conversion step: a step of electrodialyzing the second lithium chloride containing liquid to obtain a lithium hydroxide containing liquid.

2. A method for producing lithium hydroxide comprising steps (1) to (4) below:

   (1) an oxidation step: a step of adding an oxidant to a first lithium chloride containing liquid to obtain a post-oxidation liquid;
   (2) a neutralization step: a step of adding an alkali to the post-oxidation liquid to obtain a post-neutralization liquid;
   (3) an ion-exchange step: a step of bringing the post-neutralization liquid into contact with an ion-exchange resin to obtain a second lithium chloride containing liquid; and
   (4) a conversion step: a step of electrodialyzing the second lithium chloride containing liquid to obtain a lithium hydroxide containing liquid.

3. The method for producing lithium hydroxide according to claim 1 or 2, wherein
   the first lithium chloride containing liquid is obtained through:

   an adsorption step of bringing a lithium adsorbent obtained from lithium manganate into contact with a low lithium content liquid to obtain a post-adsorption lithium manganate; and
   an elution step of bringing the post-adsorption lithium manganate into contact with a hydrochloric acid solution to obtain the first lithium chloride containing liquid.

4. The method for producing lithium hydroxide according to any one of claims 1 to 3, wherein
   the ion-exchange resin used in the ion-exchange step is an iminodiacetic acid type chelating resin or an iminodiacetate type chelating resin.

5. The method for producing lithium hydroxide according to claim 4, wherein
   the iminodiacetic acid type chelating resin and the iminodiacetate type chelating resin have functional groups of a sodium form.

6. The method for producing lithium hydroxide according to any one of claims 1 to 5, wherein

   the ion-exchange step is performed with a method using a column, and
   the post-neutralization liquid passing through the column has a liquid passing rate of 1 or more and 7 or less in terms of SV.

7. The method for producing lithium hydroxide according to claim 6, wherein

the post-neutralization liquid passing through the column has a liquid passing quantity of 10 or more and 35 or less in terms of BV.

# FIG. 1

FIRST LITHIUM CHLORIDE CONTAINING LIQUID

NEUTRALIZATION STEP

NEUTRALIZED PRECIPITATE    POST–NEUTRALIZATION LIQUID

ION–EXCHANGE STEP

SECOND LITHIUM CHLORIDE CONTAINING LIQUID

CONVERSION STEP

LITHIUM HYDROXIDE CONTAINING LIQUID

# FIG. 2

FIRST LITHIUM CHLORIDE CONTAINING LIQUID

↓

| OXIDATION STEP |

↓

POST-OXIDATION LIQUID

↓

| NEUTRALIZATION STEP |

↓

NEUTRALIZED PRECIPITATE          POST-NEUTRALIZATION LIQUID

↓

| ION-EXCHANGE STEP |

↓

SECOND LITHIUM CHLORIDE CONTAINING LIQUID

↓

| CONVERSION STEP |

↓

LITHIUM HYDROXIDE CONTAINING LIQUID

# FIG. 3

LITHIUM ADSORBENT          LOW LITHIUM CONTENT LIQUID

ADSORPTION STEP

POST-ADSORPTION LITHIUM MANGANATE    HYDROCHLORIC ACID

ELUTION STEP

FIRST LITHIUM CHLORIDE CONTAINING LIQUID

NEUTRALIZATION STEP

NEUTRALIZED PRECIPITATE    POST-NEUTRALIZATION LIQUID

ION-EXCHANGE STEP

SECOND LITHIUM CHLORIDE CONTAINING LIQUID

CONVERSION STEP

LITHIUM HYDROXIDE CONTAINING LIQUID

# FIG. 4

LITHIUM ADSORBENT          LOW LITHIUM CONTENT LIQUID

↓

ADSORPTION STEP

↓

POST-ADSORPTION LITHIUM MANGANATE    HYDROCHLORIC ACID

↓ ↓

ELUTION STEP

↓

FIRST LITHIUM CHLORIDE CONTAINING LIQUID

↓

OXIDATION STEP

↓

POST-OXIDATION LIQUID

↓

NEUTRALIZATION STEP

↓                    ↓

NEUTRALIZED PRECIPITATE    POST-NEUTRALIZATION LIQUID

↓

ION-EXCHANGE STEP

↓

SECOND LITHIUM CHLORIDE CONTAINING LIQUID

↓

CONVERSION STEP

↓

LITHIUM HYDROXIDE CONTAINING LIQUID

## INTERNATIONAL SEARCH REPORT

| | International application No. |
|---|---|
| | PCT/JP2021/000466 |

### A. CLASSIFICATION OF SUBJECT MATTER
Int.Cl. C01D15/02(2006.01)i, B01D61/42(2006.01)i, C01D15/04(2006.01)i, C25B1/16(2006.01)i, H01M4/505(2010.01)i
FI: C01D15/02, C01D15/04, C25B1/16, B01D61/42, H01M4/505
According to International Patent Classification (IPC) or to both national classification and IPC

### B. FIELDS SEARCHED
Minimum documentation searched (classification system followed by classification symbols)
Int.Cl. C01D15/02, B01D61/42, C01D15/04, C25B1/16, H01M4/505

Documentation searched other than minimum documentation to the extent that such documents are included in the fields searched
Published examined utility model applications of Japan          1922-1996
Published unexamined utility model applications of Japan        1971-2021
Registered utility model specifications of Japan                1996-2021
Published registered utility model applications of Japan        1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2011-518257 A (CHEMETALL FOOTE CORPORATION) 23 June 2011 (2011-06-23), claims, paragrpahs [0058]-[0078], [0102], [0103], fig. 1 | 1-2<br>4-7<br>3 |
| Y<br>A | JP 2009-270188 A (KEE KK) 19 November 2009 (2009-11-19), claims, paragrpahs [0014]-[0022] | 4-7<br>1-3 |
| A | JP 2000-126766 A (JAPAN ORGANO CO., LTD.) 09 May 2000 (2000-05-09), entire text | 1-7 |
| A | JP 2012-121780 A (SUMITOMO METAL MINING CO., LTD.) 28 June 2012 (2012-06-28), entire text | 1-7 |
| A | WO 2013/153692 A1 (ASAHI KASEI CORPORATION) 17 October 2013 (2013-10-17), entire text | 1-7 |

☒ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 March 2021 | 23 March 2021 |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2021/000466

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-32151 A (KEE KK) 17 February 2011 (2011-02-17), entire text | 1-7 |

Form PCT/ISA/210 (second sheet) (January 2015)

| INTERNATIONAL SEARCH REPORT | International application No. |
|---|---|
| Information on patent family members | PCT/JP2021/000466 |

| | | |
|---|---|---|
| JP 2011-518257 A | 23 June 2011 | US 2011-0044882 A1<br>claims, paragraphs [0056]-[0076],<br>[0098], [0099], fig. 1<br>CN 102016123 A<br>KR 10-2011-8227 A |
| JP 2009-270188 A | 19 November 2009 | (Family: none) |
| JP 2000-126766 A | 09 May 2000 | (Family: none) |
| JP 2012-121780 A | 28 June 2012 | (Family: none) |
| WO 2013/153692 A1 | 17 October 2013 | (Family: none) |
| JP 2011-32151 A | 17 February 2011 | (Family: none) |

Form PCT/ISA/210 (patent family annex) (January 2015)